# EUROPEAN PATENT APPLICATION

(11) **EP 4 834 777 A1**
(43) Date of publication of application: **04.11.2026**
(21) Application number: 25382447.8
(22) Date of filing: 02.05.2025
(51) Int. Cl.: B65B 9/067, B65B 9/08, B65B 51/30

(54) **SEALING UNIT, TUBULAR BAG PACKAGING MACHINE AND METHOD FOR PRODUCING A CROSS-SEALED SEAM**

(71) Applicant: MULTIVAC Sepp Haggenmüller SE & Co. KG, 87787 Wolfertschwenden (DE)
(72) Inventor: Serrano, Jónatan, 08397 Pineda de Mar (Barcelona) (ES); Colomer, Carles, 17300 Blanes (ES); Albert, Oriol, 17300 Blanes (ES)
(74) Representative: Grünecker Patent- und Rechtsanwälte PartG mbB

(57) **Abstract**

Sealing unit (4) for producing a cross-sealed seam (35) on a packaging material (8), wherein the sealing unit (4) comprises:
- a first conveyor belt assembly (14) and a second conveyor belt assembly (15), wherein each of the first conveyor belt assembly (14) and the second conveyor belt assembly (15) comprises a conveyor belt (16, 17) for transporting the packaging material (8) in a running direction (10), a drive roll (18, 19) for driving the conveyor belt (16, 17) and a deflection roll (20, 21) for deflecting the conveyor belt (16, 17), and
- a sealing device (22) for providing the cross-sealed seam (35) on the packaging material (8), wherein the sealing device (22) is positioned between the first conveyor belt assembly (14) and the second conveyor belt assembly (15),
wherein the deflection roll (20) of the first conveyor belt assembly (14) is movable towards and away from the deflection roll (21) of the second conveyor belt assembly (15) in the running direction (10) such that a gap (28) between the deflection roll (20) of the first conveyor belt assembly (14) and the deflection roll (21) of the second conveyor belt assembly (15) varies with the longitudinal movement of the deflection roll (20) of the first conveyor belt assembly (14), wherein the longitudinal movement of the deflection roll (20) of the first conveyor belt assembly (14) may be selectively activated.

## Description

The present invention relates to a sealing unit, a tubular bag packaging machine comprising a sealing unit, and/or a method for producing a cross-sealed seam on a packaging material.

### Prior Art

Methods and devices for sealing various kinds of packaging materials, e.g. plastic foils, have been known for several years. In general, a product is placed in the tubular packaging material and the filled packaging material is moved to a pair of cross-sealing jaws by means of a supply belt. The cross-sealing jaws are closed to seal the packaging material transversely with respect to its transport direction. By providing a cross-sealing seam before and after the product, a sealed package is formed. After sealing a removal belt transports the sealed package away from the cross-sealing jaws.

Generally, the cross-sealing jaws are positioned in a gap between the said conveyor belts, such that they can move past them in a vertical direction. When the cross-sealing jaws are in an opened position, which is required for transporting the packaging material through the sealing device, the packaging material can slip into the gap. As a consequence, small products can fall out of the unsealed packaging material into the gap or the sealed package as a whole can fall into the gap. Further, the packaging material can be deformed or damaged. This can have a negative effect on the aesthetic of the manufactured package. In the worst case, the packaging machine must then be stopped and the material or product be removed from the gap.

### Object

The objective technical problem to be solved is to provide a device and/or method for producing a cross-sealed seam on a packaging material, which overcomes the disadvantages of the State of the Art.

### Summary

According to the invention, this object is solved by a sealing unit according to claim 1, a tubular bag packaging machine according to claim 11, and/or a method for producing a cross-sealed seam on a packaging material according to claim 12.

Further advantageous embodiments of the invention are covered by the dependent claims.

One aspect of the invention relates to a sealing unit for producing a cross-sealed seam on a packaging material, wherein the sealing unit comprises:
- a first conveyor belt assembly and a second conveyor belt assembly, wherein each of the first conveyor belt assembly and the second conveyor belt assembly comprises a conveyor belt for transporting the packaging material in a running direction, a drive roll for driving the conveyor belt and a deflection roll for deflecting the conveyor belt, and
- a sealing device for providing the cross-sealed seam on the packaging material, wherein the sealing device is positioned between the first conveyor belt assembly and the second conveyor belt assembly,
wherein the deflection roll of the first conveyor belt assembly is movable towards and away from the deflection roll of the second conveyor belt assembly in the running direction such that a gap between the deflection roll of the first conveyor belt assembly and the deflection roll of the second conveyor belt assembly varies with the (longitudinal) movement of the deflection roll of the first conveyor belt assembly, wherein the (longitudinal) movement of the deflection roll of the first conveyor belt assembly may be selectively activated.

Thus, the deflection roll may fulfill a rotating movement as well as a longitudinal movement in and against the running direction, in particular when viewed from the side. These movements may be performed simultaneously.

A longitudinal movement may mean that the deflection roll of the first conveyor belt assembly is moved towards and/or away from the deflection roll of the second conveyor belt assembly.

By moving the deflection roll of the first conveyor belt assembly closer to the deflection roll of the second conveyor belt assembly, it may be prevented that (small) products fall out of the unsealed packaging material into the intermediate gap. Thus, it may be prevented that the packaging material is deformed or damaged. In consequence, it may be ensured that sealed packages with good aesthetic characteristics may be formed and the amount of wasted packaging material due to inaccurate processing may be reduced. It may be avoided to stop the sealing unit or even the whole packaging machine in which the sealing unit may be integrated or connected with because of plant malfunctions. An (almost) unobstructed operation of the sealing unit or the packaging machine may be ensured.

By selectively activating and deactivating the longitudinal movement of the deflection roll of the first conveyor belt assembly, the sealing unit may be adjusted to different operation modes. If the products within the packaging material are quite small and there is a risk that they fall into the gap, the longitudinal movement of the deflection roll of the first conveyor belt assembly may be activated to ensure safe transport of the packaging material. In contrast, if there is no or low risk that the products or the packaging material can fall into the gap, the longitudinal movement of the deflection roll of the first conveyor belt assembly in the running direction may not be activated or may be deactivated. This may allow operating the sealing unit situationally and thus, more energy and cost efficient, because the deflection roll of the first conveyor belt assembly may not be constantly activated.

The packaging material may be a foil, in particular a single layer foil or a multiple layer foil. The packaging material may comprise plastic. The packaging material may be (almost) endless. The packaging material fed to the sealing unit may be tubular. One or more products may be provided in its interior. The packaging material may comprise a longitudinal seam, in particular extending in the running direction. The running direction may correspond to a direction in which products to be packaged are transported and/or in which the packaging material is transported, e.g. in a tubular bag packaging machine.

The cross-sealed seam may extend in a direction perpendicular to the running direction, in particular when viewed from the top. The cross-sealed seam may extend in a direction perpendicular to the longitudinal seam.

The first conveyor belt assembly may be configured identical to or different from the second conveyor belt assembly. The conveyor belt may be wrapped around the drive roll and the deflection roll such that the conveyor belt (continuously) moves around the drive roll and the deflection roll. An upper surface part of the conveyor belt of the first conveyor belt assembly, in particular when viewed from the side, may be moved in the running direction for transporting the packaging material placed on the upper surface in the running direction to the sealing device. An upper surface part of the conveyor belt of the second conveyor belt assembly, in particular when viewed from the side, may be moved in the running direction for transporting the sealed packages in the running direction away from the sealing device.

The conveyor belt may comprise or consist of rubber, silicone and/or plastic A surface of the conveyor belt may be coated, in particular with a synthetic material. Thus, durability may be increased. A surface of the conveyor belt and/or of the coating may be roughened. Thus, the packaging material and/or sealed packages may be securely transported without risking that it slips from or shifts on the conveyor belt. The conveyor belt may be elastic.

The drive roll of the first conveyor belt assembly and/or the drive roll of the first conveyor belt assembly may be rotated around a rotation axis, in particular wherein the rotation axis is perpendicular to the running direction. The deflection roll of the first conveyor belt assembly and/or the deflection roll of the first conveyor belt assembly may be rotated around a rotation axis, in particular wherein the rotation axis is perpendicular to the running direction. The drive roll may be driven by a motor, in particular by an electric motor. The motor may be connected with the drive roll for rotating the drive roll with a predefined rotation speed. The motor may be matched with a feed speed of the packaging machine. The deflection roll may be rotated passively, in particular when the drive roll is rotated and its torque is transmitted via the conveyor belt to the deflection roll. Optionally, the deflection roll may be driven by a motor, in particular the same motor as the drive roll.

The drive roll may be connected with the first/second conveyor belt assembly on a fixed position, i.e. without being able to longitudinally move in the running direction. In this embodiment, it may be advantageously that the conveyor belt is elastic. When moving the deflection roll of the first conveyor belt assembly in the running direction, in particular away from the drive roll, the conveyor belt may be deformed, in particular reversibly stretched.

Optionally, the drive roll of the first conveyor belt assembly may be movable together with the deflection roll towards and away from the deflection roll of the second conveyor belt assembly in the running direction. In this embodiment, the drive roll and the deflection roll may be fixed to the first/second conveyor belt assembly such that they can fulfill a longitudinal movement in the running direction, in particular, wherein a distance between the drive roll and the deflection roll may not change.

The deflection roll, and optionally the drive roll, of the first conveyor belt assembly may be intermittently or cyclically movable in and against the running direction. The drive roll and the deflection roll of the same conveyor belt assembly may be simultaneously movable in the longitudinal direction. The longitudinal movement of the drive roll and the deflection roll may be actuated together or individually, in particular with the same or individual motors. Optionally, the longitudinally movement of the deflection roll may be actively activated and the drive roll may passively follow the longitudinal movement of the deflection roll.

The sealing unit may further comprise a controller for controlling the processes of the sealing unit. The controller may be configured to control the first conveyor belt assembly and/or the second conveyor belt assembly, in particular the activation and/or deactivation of the respective deflection roll. The controller may be configured to control the motor for driving the drive roll(s). The controller may be configured to control the sealing device, in particular the movement of (at least one of) its cross-sealing jaws.

Preferably, the sealing unit is operable in a first operating mode and in a second operating mode, wherein in the first operating mode the gap remains constant and wherein in the second operating mode the gap varies with the longitudinal movement of the deflection roll of the first conveyor belt assembly.

In other words, the sealing unit may be selectively operable in the first operating mode or in the second operating mode, wherein if the first operating mode is selected, the deflection roll of the first conveyor belt assembly is not longitudinally moved and if the second operating mode is selected, the deflection roll of the first conveyor belt assembly is longitudinally moved. The advantage of this embodiment is that this allows operating the sealing unit situationally and thus more energy and cost efficient, because the deflection roll of the first conveyor belt assembly may not be constantly activated. A further benefit of the first operating mode may be that the movement of the upper and/or lower cross-sealing jaw must not be coordinated with the longitudinal movement of the deflection roll of the first conveyor belt assembly. The movement of the upper and/or lower cross-sealing jaw may therefore not be limited by a possibly slower movement of the deflection roll. This may allow a faster movement of the upper and/or lower cross-sealing jaw in the first operating mode than in the second operating mode. This may increase the number of produced cross-sealed seams per time.

Preferably, the sealing device comprises an upper cross-sealing jaw and a lower cross-sealing jaw, wherein the upper cross-sealing jaw and the lower cross-sealing jaw are movable towards and away from each other in a direction perpendicular to the running direction for providing the cross-sealed seam, wherein the longitudinal movement of the deflection roll of the first conveyor belt assembly depends on the movement of the upper cross-sealing jaw and the lower cross-sealing jaw.

The advantage of this embodiment is that the deflection roll may be precisely moved in or against the running direction for safely transporting the packaging material.

The sealing device may be configured for sealing the packaging material by applying a cross-seam to the packaging material. For this purpose, the upper cross-sealing jaw and/or the lower cross-sealing jaw may comprise a heatable sealing surface, which may heat the packaging material to at least its melting temperature. Each of the upper cross-sealing jaw and the lower cross-sealing jaw may comprise at least one, preferably two, sealing surfaces. The sealing surfaces may be parallel to each other for providing two parallel linear cross-sealed seams on the packaging material. The sealing surfaces may extend parallel to the running direction, in particular when viewed from the side. The sealing surfaces may be distanced from another by at least three millimeters, in particular by at least five millimeters, and/or of at most two centimeters, in particular by at most one centimeter.

The upper cross-sealing jaw and the lower cross-sealing jaw may be configured identical to or different from each other. Each of the upper cross-sealing jaw and the lower cross-sealing jaw may have a width of at least two centimeters, in particular of at least three centimeters, and/or of at most five centimeters, in particular of at most four centimeters, in particular when viewed from the side.

Only one or both of the upper cross-sealing jaw and the lower cross-sealing jaw may be moved. The upper cross-sealing jaw and/or the lower cross-sealing jaw may be driven by the same or different motors in order to move along a sealing axis, which is perpendicular to the running direction. Alternatively, only one of the upper cross-sealing jaw and the lower cross-sealing jaw may be actively driven by a motor. The non-driven upper cross-sealing jaw or lower cross-sealing jaw may be driven passively by the movement of the actively driven upper cross-sealing jaw or lower cross-sealing jaw. The upper cross-sealing jaw and/or the lower cross-sealing jaw may be movable intermittently or cyclically. The upper and the lower cross-sealing jaw may be moved synchronously.

Preferably, a longitudinal moving speed and/or a displacement path of the deflection roll of the first conveyor belt assembly depends on a speed and/or an opening height of the upper cross-sealing jaw and the lower cross-sealing jaw.

The advantage of this embodiment is that the deflection roll may be precisely moved in or against the running direction. It may be ensured, that the conveyor belt safely transports the packaging material without the risk of the packaging material or a product placed therein falling into the gap.

The deflection roll may be moved between a closed position, in which the gap is minimum, and an opened positon, in which the gap is maximum. When moving from the opened position to the closed position, the deflection roll may pass the sealing axis. The displacement path of the deflection roll may correspond to a covered distance of the deflection roll, measured from its rotation axis, when moving longitudinally from the closed position to the opened position. The deflection roll of the first conveyor belt assembly may longitudinally move from the closed position to the opened position, in particular away from the deflection roll of the second conveyor belt assembly, as much as is required for allowing the cross-sealing jaws to move through the gap. In particular, the maximum gap may correspond to the width of the cross-sealing jaw plus at least one millimeter, preferably plus three millimeters, in particular plus five millimeters, in particular plus at most three centimeters, in particular at most two centimeter, in particular plus at most one centimeter. The displacement path may be at least one centimeter, in particular at least two centimeters, in particular at least five centimeters, and/or at most 15 centimeters, in particular at most 10 centimeters. The longitudinal moving speed of the deflection roll may be at least two centimeters per second, in particular at least five centimeter per second, and/or at most 15 centimeters per second, in particular at most ten centimeters per second.

The speed of the upper cross-sealing jaw and the lower cross-sealing jaw may be at least two centimeters per second, in particular at least five centimeter per second, and/or at most 15 centimeters per second, in particular at most ten centimeters per second. The opening height of the upper and/or lower cross-sealing jaw may be measured from its sealing surface in a lower position in which the sealing surface may seal the packaging material and its sealing surface in an upper position in which no sealing may be performed. In the lower position, the sealing surface may be on the same height as the upper surface of the conveyor belt of the first conveyor belt assembly.

The opening height of the upper and/or lower cross-sealing jaw may be identical or different. The opening height may depend on the height of the packaging material and/or the product within the packaging material. The opening height may be the product height plus at least 0.5 centimeter, in particular plus at least one centimeter, and/or plus at most two centimeters, in particular plus at most three centimeters. The opening height of the upper cross-sealing jaw may be at least four centimeters, in particular at least ten centimeters, and/or at most 20 centimeters, in particular at most 15 centimeters. The opening height may depend on the height of the first and/or second conveyor belt assembly

The longitudinal moving speed and displacement path of the deflection roll of the first conveyor belt assembly may be coordinated with the speed and opening height of the upper and/or lower cross-sealing jaw such that the deflection roll of the first conveyor belt does not hit the upper and/or lower cross-sealing jaw. The longitudinal moving speed of the deflection roll of the first conveyor belt assembly and/or the speed of the upper and/or lower cross-sealing jaw may be coordinated with a feed speed of the packaging machine in the running direction.

Preferably, the gap is variable between 0.5 and 15 centimeters, in particular between 0.8 centimeters and 4.8 centimeters.

This may allow the deflection roll of the first conveyor belt assembly to fulfill sufficient longitudinal movement for allowing the upper and/or lower cross-sealing jaw to move past the deflection rolls. Further, it may be ensured, that the gap is small enough so that neither the packaging material nor the product can fall into the gap.

The gap may be measured between the outer surfaces of the conveyor belts surrounding the respective deflection roll in the transport direction. The variation of the gap may depend on the dimension of the sealing device, in particular the width of its cross-sealing jaws. Optionally, the variation of the gap may depend on the packaging material, in particular its stiffness, and/or the product within the packaging material, in particular its dimensions and/or stiffness.

Preferably, the sealing unit comprises a switching unit for activating and deactivating the longitudinal movement of the deflection roll of the first conveyor belt assembly.

Thus, the longitudinal movement of the deflection roll may be selectively activated and deactivated. This may allow precisely controlling the longitudinal movement of the deflection roll.

The switching unit may be manually operable by a user. Alternatively, the switching unit may be integrated into or communicate with the controller of the sealing unit. The controller may control the switching unit, preferably automatically. This may reduce the time for deciding whether the longitudinal movement of the deflection roll should be activated/deactivated and the time for performing the activation/deactivation compared to a manual control. The overall operation time of the sealing unit may be increased.

The activation and/or deactivation of the longitudinal movement of the deflection roll of the first conveyor belt assembly, i.e. the selection of the first operating mode or of the second operating mode, may depend on the opening height of the upper cross-sealing jaw and/or the lower cross-sealing jaw. The opening height of the upper cross-sealing jaw and/or the lower cross-sealing jaw may depend on the height of the product within the packaging material. The higher the products are, the higher the risk may be that they fall into the gap. Thus, the longitudinal movement of the deflection roll of the first conveyor belt assembly may be activated if the height of the product is higher than a prescribed height value. The height value may be at least three centimeters, in particular at least five centimeters, and/or at most 15 centimeters, in particular at most ten centimeters. The longitudinal movement of the deflection roll of the first conveyor belt assembly may be deactivated if the height of the product is the or lower than the prescribed height value. A sensor may be provided for measuring the height of the product. The height of the product may be measured from the upper surface of the conveyor belt on which the product is placed in the transverse direction. The product height may be measured contactless. The sensor may be at least one of an optical sensor, e.g. a (2D-, or 3D-)camera, an inductive sensor, a capacitive sensor and an ultrasound sensor. The sensor may provided on the sealing unit, in particular on the first conveyor belt assembly. If the sealing unit is part of or provided on a packaging machine, the sensor may be provided upstream of the sealing unit on the packaging machine. The sensor may transmit a signal corresponding to the height of the product to the switching unit. The switching unit may be configured for automatically selecting the first operating mode or the second operating mode depending on the signal of the sensor.

The switching unit may be configured for (de)activating the longitudinal movement of the deflection roll of the second conveyor belt assembly too. The longitudinal movement of the deflection roll of the first conveyor belt assembly and the longitudinal movement of the deflection roll of the second conveyor belt assembly may be actuated by the same switching unit or by different switching units.

Preferably, the switching unit is configured for electrically and/or mechanically activating the longitudinal movement of the deflection roll of the first conveyor belt assembly.

This may allow any easy and precise control of the activation and deactivation of the longitudinal movement of the deflection roll of the first conveyor belt assembly. The switching unit may be at least one of an electrical switch, a mechanical lever and a shifting gate.

Preferably, the switching unit comprises a shifting gate and a lever, wherein the shifting gate is attached to the first conveyor belt assembly and wherein the lever is attached to the lower cross-sealing jaw, wherein the lever is slidable in the shifting gate depending on the movement of the lower cross-sealing jaw, wherein activation and/or deactivation of the longitudinal movement of the deflection roll of the first conveyor belt assembly depends on the position of the lever in the shifting gate.

This may allow for an easy and direct activation and deactivation of the longitudinal movement of the deflection roll. The switching between the first operating mode and the second operating mode may take place depending on the position of the lever in the shifting gate.

The shifting gate may comprise an upper shifting part, a lower shifting part and a middle shifting part. The upper shifting part and the lower shifting part may longitudinally extend parallel to the sealing axis. The upper shifting part may be closer to the sealing axis, in particular when viewed from the side, compared to the lower shifting part. The middle shifting part may connect the upper shifting part and the lower shifting part, in particular wherein the middle shifting part may be inclined with respect to the sealing axis.

The lever may be, in particular detachably, fixed to the lower cross-sealing jaw in such a way that if the lower cross-sealing jaw is moved along the sealing axis, the lever remains in a fixed position to the lower cross-sealing jaw. The lever may be fixed to a stroke axis of the lower cross-sealing jaw. By moving the stroke axis of the lower cross-sealing jaw along the sealing axis the lever may be caused to move within the shifting gate. The dimension of the shifting gate, in particular of the upper shifting part, the lower shifting part and the middle shifting part, may determine the movement of the lever. If the movement of the lower cross-sealing jaw is such that the lever only moves within the upper shifting part, the deflection roll of the first conveyor belt assembly may not be activated. If the movement of the lower cross-sealing jaw is such that the lever moves along, in particular past, the middle shifting part to the lower shifting part, the deflection roll of the first conveyor belt assembly may be activated. Thus, the movement of the lower cross-sealing jaw, in particular its stroke, may activate and deactivate the longitudinal movement of the deflection roll of the first conveyor belt assembly. In the first operating mode, the distance travelled by the lower cross-sealing jaw may be less than in the second operating mode. Due to this smaller movement, the lower cross-sealing jaw may be moved faster in the first operating mode than in the second operating mode. Optionally, a clock rate with which seals are generated can be higher.

Preferably, the sealing device comprises a cutting device for cross-cutting the packaging material into sealed packages, in particular wherein the sealing device is configured for sealing and cutting simultaneously.

This may allow to manufacture individual sealed packages in any easy and time-saving manner. No additional cutting unit or cutting step may be required. Since the packaging material may be clamped by means of the upper cross-sealing jaw and to the lower cross-sealing jaw during sealing, the packaging material may be held in a fixed position, which may allow performing a precise cut.

The cutting device may be a knife, in particular wherein the knife may be fixed to the upper cross-sealing jaw or to the lower cross-sealing jaw. The knife may be positioned parallel to the sealing surface of the upper or lower cross-sealing jaw. Preferably, the knife may be positioned between the two sealing surfaces of the upper or lower cross-sealing jaw. On the cross-sealing jaw to which no knife is fixed, a groove may be provided into which the knife may slide when cutting the packaging material. Alternatively knifes may be fixed to the upper cross-sealing jaw and to the lower cross-sealing jaw, which, when their blades contact, may cut the packaging material. The knife may be passively moved together with the upper and/or lower cross-sealing jaw. Alternatively or additionally, the knife may be actively driven by a motor to perform a movement relative to the upper and/or lower cross-sealing jaw.

The activation and/or deactivation of the longitudinal movement of the deflection roll of the first conveyor belt assembly may depend on the length of the individual sealed packages. The shorter the package, the higher the risk may be that the package falls into the gap. Thus, the longitudinal movement of the deflection roll of the first conveyor belt assembly may be activated if the length of the package is lower a prescribed length value. The longitudinal movement of the deflection roll of the first conveyor belt assembly may be deactivated if the length of the package corresponds to or is higher than the prescribed length value. The length value may be at least three centimeters, in particular at least five centimeters, and/or at most 15 centimeters, in particular at most ten centimeters.

Preferably, the deflection roll of the second conveyor belt assembly is movable towards and away from the deflection roll of the first conveyor belt assembly in the running direction, wherein the longitudinal movement of the deflection roll of the second conveyor belt assembly is opposite to the longitudinal movement of the deflection roll of the first conveyor belt assembly.

This may allow for an even more secure transport of the packaging material and of the sealed packages, i.e. further reducing the risk that the packaging material may fall into the gap.

The first conveyor belt assembly may be configured identical to or different from the second conveyor belt assembly. Each of the abovementioned features regarding the first conveyor belt assembly may be applied to the second conveyor belt assembly in the same manner. The deflection roll of the second conveyor belt assembly may be activated in the same manner as the deflection roll of the first conveyor belt assembly. The longitudinal movement of the deflection roll of the second conveyor belt assembly may be simultaneous to the longitudinal movement of the deflection roll of the first conveyor belt assembly.

The invention further relates to a tubular bag packaging machine for producing a package with a cross-sealed seam from a packaging material, wherein the tubular bag packaging machine comprises a sealing unit according to the invention as described above.

The tubular bag packaging machine may offer the same benefits as the sealing unit described above.

The tubular bag packaging machine may comprise a transporting device for transporting products that need sealing with a sealing material. These products may be transported along the running direction. Particularly, the transporting device may be implemented as a conveyor belt assembly or other suitable conveyor for transporting the products.

The tubular bag packaging machine may comprise a provisioning system for providing the packaging material. The provisioning system may particularly comprise a packaging material roll. The packaging material roll may be actively driven, e.g. by means of a drive, or passively driven, e.g. by traction initiated by the sealing unit. Optionally, the provisioning system may comprise further elements, like deflection rolls and/or drives and/or brakes, that may facilitate and control transporting of the packaging material so that it is provided, in the region of the transporting device, above the products.

The tubular bag packaging machine may comprise forming set for folding the packaging material around the products, so that it is wrapped around the products. The forming set may be a guide rail or tunnel along which the packaging material may be guided to be positioned around the product.

Downstream of the forming set in the running direction may be provided a sealing unit for providing a longitudinal-sealed seam on the packaging material. Two longitudinal-sealing jaws may seal on the top or bottom side of the packaging material a longitudinal sealed seam.

Downstream of the sealing unit for providing the longitudinal-sealed seam in the running direction of the products, the sealing unit for providing the cross-sealed seam, which was already described above, may be provided. It may be configured to apply a cross-sealing to the packaging material that may extend in a direction substantially perpendicular to the running direction, in particular when viewed from the top. The said transporting device may transport the packaging material with the product to the sealing unit.

A cutting unit comprising a knife may be provided downstream of the sealing unit for providing the cross-sealed seam. The cutting unit may be configured to cut the packaging material so as to provide individual sealed packages. Alternatively, the cutting unit may be integrated into the sealing unit for providing the cross-sealed seam.

The tubular bag packaging machine may further comprise a controller for controlling the processes of the tubular bag packaging machine. The controller of the inventive sealing unit for providing the cross-sealed seam may be connected with or integrated into the controller of the tubular bag packaging machine.

The tubular bag packaging machine may be operated with a predefined feed speed. The sealing unit for providing the cross-sealed seam may be configured to move cyclically or intermittently with the feed speed of the tubular bag packaging machine in the running direction.

The invention further relates to a method for producing a cross-sealed seam on a packaging material by means of a sealing unit according to the invention as described above, wherein the method comprises the steps of:
moving the packaging material to the sealing device by means of the conveyor belt of the first conveyor belt assembly,
sealing the packaging material with the sealing device, and
moving the sealed packaging material away from the sealing device by means of the conveyor belt of the second conveyor belt assembly,
wherein the longitudinal movement of the deflection roll of the first conveyor belt assembly towards and away from the deflection roll of the second conveyor belt assembly in the running direction is selectively activated,
wherein if the longitudinal movement of the deflection roll of the first conveyor belt assembly is activated, the gap between the deflection roll of the first conveyor belt assembly and the deflection roll of the second conveyor belt assembly varies with the longitudinal movement of the deflection roll of the first conveyor belt assembly and if the longitudinal movement of the deflection roll of the first conveyor belt assembly is deactivated, the gap remains constant.

The method may offer the same benefits as the sealing unit described above.

Preferably, the sealing device comprises an upper cross-sealing jaw and a lower cross-sealing jaw, wherein the deflection roll of the first conveyor belt assembly is moved away from the deflection roll of the second conveyor belt assembly when the upper cross-sealing jaw and the lower cross-sealing jaw are moved towards each other and wherein the deflection roll of the first conveyor belt assembly is moved towards the deflection roll of the second conveyor belt assembly when the upper cross-sealing jaw and the lower cross-sealing jaw are moved away from each other.

Thus, the packaging material may be securely held by the first conveyor belt assembly and the second conveyor belt assembly. This may reduce the risk that the packaging material falls into the gap, in particular when the packaging is transported between after/before a sealing step. As described above, the longitudinal movement of the deflection roll of the first conveyor belt assembly may be coordinated with the movement of the upper and/or lower cross-sealing jaw, in particular with regard to the speed and/or extent of their respective movements.

Preferably, during the sealing step the packaging material is cut by the cutting device of the sealing device to provide a cross-sealed package.

This may allow to manufacture individual sealed packages in any easy and time-saving manner.

Preferably, the longitudinal movement of the deflection roll of the first conveyor belt assembly is activated if a height of the product within the packaging material is higher than a prescribed height value and/or if a length of the sealed package is lower than a prescribed length value.

Features or explanations described with regard to one of the aspects (sealing unit, tubular bag packaging machine or method) may be transferred to and combined with the other aspects.

The invention is explained in more detail below with reference to embodiments.
Figure 1 shows a schematic depiction of a tubular bag packaging machine from a side view according to one embodiment
Figure 2 shows a side view of a sealing unit for providing a cross-sealed seam from a side view during the sealing step
Figure 3 shows a side view of a sealing unit for providing a cross-sealed seam from a side view after the sealing step, wherein the longitudinal movement of the deflection roll of the first conveyor belt assembly is deactivated
Figure 4 shows a side view of a sealing unit for providing a cross-sealed seam from a side view after the sealing step, wherein the longitudinal movement of the deflection roll of the first conveyor belt assembly is activated
Figure 5 shows a top view of a packaging material without cross-sealed seam
Figure 6 shows a top view of individual cross-sealed packages
Figures 7 to 9 show a side view of a switching unit of the sealing unit for activating and deactivating the longitudinal movement of the deflection roll of the first conveyor belt assembly in different switching states

Identical technical components are provided with the same reference signs throughout the figures.

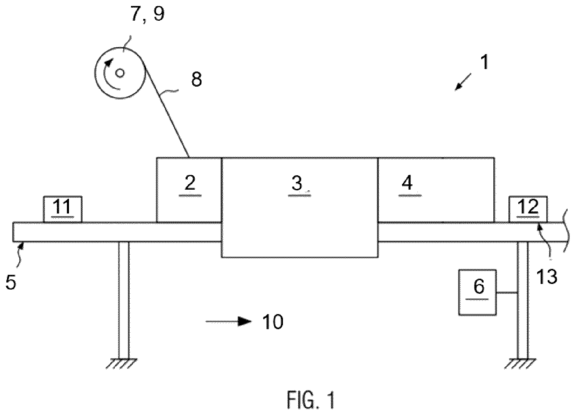

Figure 1 shows a schematic side view of a tubular bag packaging machine 1 according to one embodiment of the present disclosure. The tubular bag packaging machine 1 comprises a transporting device 5 in the form of a conveyor belt assembly for transporting products 11. These products 11 are transported along a running direction 10 schematically depicted with an arrow towards a sealing unit 4, which will be described in detail below.

The tubular bag packaging machine 1 further comprises a provisioning system 7 for providing the packaging material 150. The provisioning system 7 particularly comprises a packaging material roll 9 so that the packaging material 8 is provided, in the region of the transporting device 5, above the products 11. The packaging material 8 is an endless single layer plastic foil.

The tubular bag packaging machine 1 is intended to fold the packaging material 8 around the products 11 so that it is wrapped around the products 11, leaving, on a bottom side 13 of the produced packages 12 a sealed seam (not shown). The positioning of the packaging material 8 around the products 11 is realized by means of a forming set 2. The forming set 2 comprises a tunnel along which the packaging material 8 is guided to be positioned around the product 11. Downstream of the forming set 2, there is provided a sealing unit 3 for providing a longitudinal-sealed seam on the packaging material 11.

Downstream of the sealing unit 3 in the running direction 10, the sealing unit 4 for providing a cross-sealed seam is provided. It applies a cross-sealing to the packaging material 8 that extends in a direction substantially perpendicular to the running direction 10 (i.e. into the drawing plane) so as to seal the packaging material 8 also in the transverse direction.

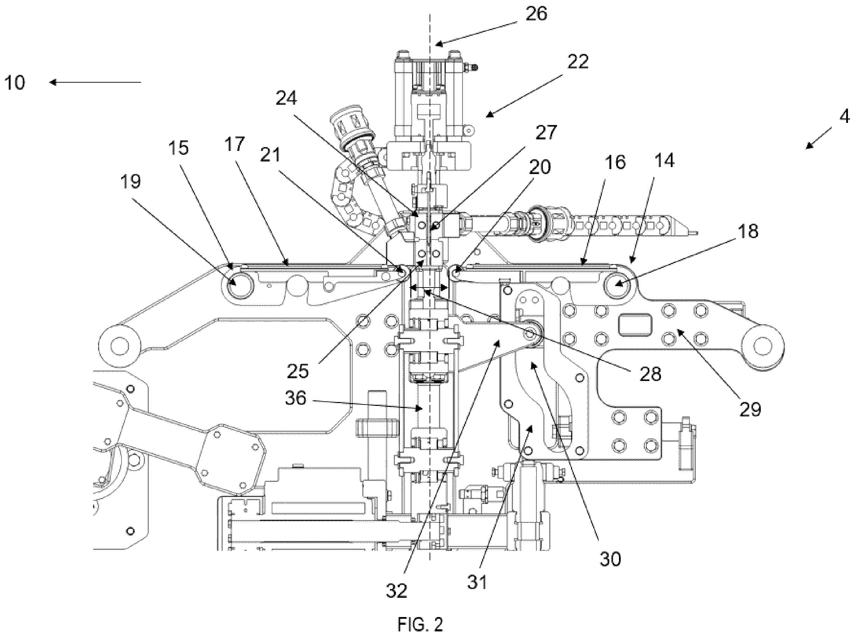

The sealing unit 4 is further configured for cutting the packaging material in the transverse direction. For this purpose, a cutting device 27 in the form of a knife is provided, which cuts the packaging material 8 so as to provide individual packages 12 (see Figures 2-4).

The tubular bag packaging machine 1 further comprises a controller 6 for controlling the processes of the tubular bag packaging machine 1.

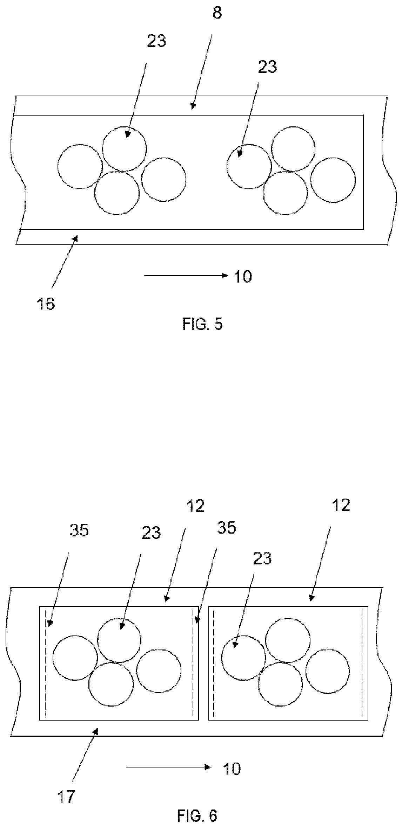

Figure 2 shows the sealing unit 4 for providing a cross-sealed seam 35 (see Figure 6) from a side view according to one embodiment. The sealing unit 4 comprises a first conveyor belt assembly 14 and a second conveyor belt assembly 15. Each of the first conveyor belt assembly 14 and the second conveyor belt assembly 15 comprises a conveyor belt 16, 17 for transporting the packaging material 8 in the running direction 10, which is supplied by the transporting device 5. Further, each of the first conveyor belt assembly 14 and the second conveyor belt assembly 15 comprises a drive roll 18, 19 and a deflection roll 20, 21. The conveyor belts 16, 17 are wound around the drive roll 18, 19 and the deflection roll 20, 21. The drive roll 18, 19 drives the respective conveyor belt 16, 17 so that they rotate around the drive roll 18, 19 and the deflection roll 20, 21, wherein the deflection roll 20, 21 deflects the respective conveyor belt 16, 17. The sealing unit 4 further comprises a sealing device 22 for sealing the packaging material 8 in the direction perpendicular to the running direction 10.

The conveyor belt 16 of the first conveyor belt assembly 14 moves the packaging material 8 together with the product 23 (see Figure 5) placed therein in the running direction 10 to the sealing device 22. The sealing devices 22 seals the packaging material 8 in the direction perpendicular to the running direction 10 (i.e. into the drawing plane). For this purpose, the sealing device 22 comprises an upper cross-sealing jaw 24 und a lower cross-sealing jaw 25. The packaging material 8 is placed between the jaws 24, 25, which are then moved towards each other along a sealing axis 26 for sealing the packaging material 8 clamped there between (see Figures 2-4).

Simultaneous to this sealing step, the packaging material 8 is cut by the cutting device 27 (knife), which is fixed to the upper cross-sealing jaw 24. When the upper cross-sealing jaw 24 is moved downwards, the knife is moved downwards too thereby cutting the packaging material 8 into individual sealed packages 12 (see Figure 6). The individual sealed packages 12 are then moved away from the sealing device 22 by means of the conveyor belt 17 of the second conveyor belt assembly 15.

In order to move the upper cross-sealing jaw 24 und the lower cross-sealing jaw 25 for sealing the packaging material 8, they must be able to move in a gap 28 between the first conveyor belt assembly 14 and the second conveyor belt assembly 14. However, there is a risk that small products 23 can fall out of the unsealed packaging material 8 into the gap 28 or the sealed package 12 as a whole can fall into the gap 28. To overcome this problem, the deflection roll 20 of the first conveyor belt assembly 14 is selectively movable towards and away from the deflection roll 21 of the second conveyor belt assembly 15 along the running direction 10. Thereby the gap 28 is varied.

In a deactivated state, i.e. a first operating mode, the deflection roll 20 of the first conveyor belt assembly 14 remains in a fixed position relative to the deflection roll 21 of the second conveyor belt assembly 15. That is the gap 28 remains constant allowing the upper cross-sealing jaw 24 and the lower cross-sealing jaw 25 to moved relative to each other to perform the cross-sealing (see Figures 2-3).

In contrast, in an activated state, i.e. a second operating mode, the deflection roll 20 of the first conveyor belt assembly 14 moves relative to the deflection roll 21 of the second conveyor belt assembly 15 such that the gap 28 varies with this longitudinal movement. In particular, the longitudinal movement of the deflection roll 20 of the first conveyor belt assembly 14 is coordinated with the movement of the upper cross-sealing jaw 24 and the lower cross-sealing jaw 25. The deflection roll 20 of the first conveyor belt assembly 14 is moved away from the deflection roll 21 of the second conveyor belt assembly 15 when the upper cross-sealing jaw 24 and the lower cross-sealing jaw 25 are moved towards each other. The deflection roll 20 of the first conveyor belt assembly 14 is moved towards the deflection roll 21 of the second conveyor belt assembly 15 when the upper cross-sealing jaw 24 and the lower cross-sealing jaw 25 are moved away from each other. This allows a secure transport of the packaging material 8 and the individual sealed packages 12 through the sealing unit 4 (see Figures 2-4).

In Figure 2, the deflection roll 20 of the first conveyor belt assembly 14 is in an opened position. In this state, the gap 28 between the deflection roll 20 of the first conveyor belt assembly 14 and the deflection roll 21 of the first conveyor belt assembly 15 is maximum. In the exemplary embodiment, the gap is 4.8 centimeters. The upper cross-sealing jaw 24 and the lower cross-sealing jaw 25 contact the packaging material 8 for providing the cross-sealed seam 35.

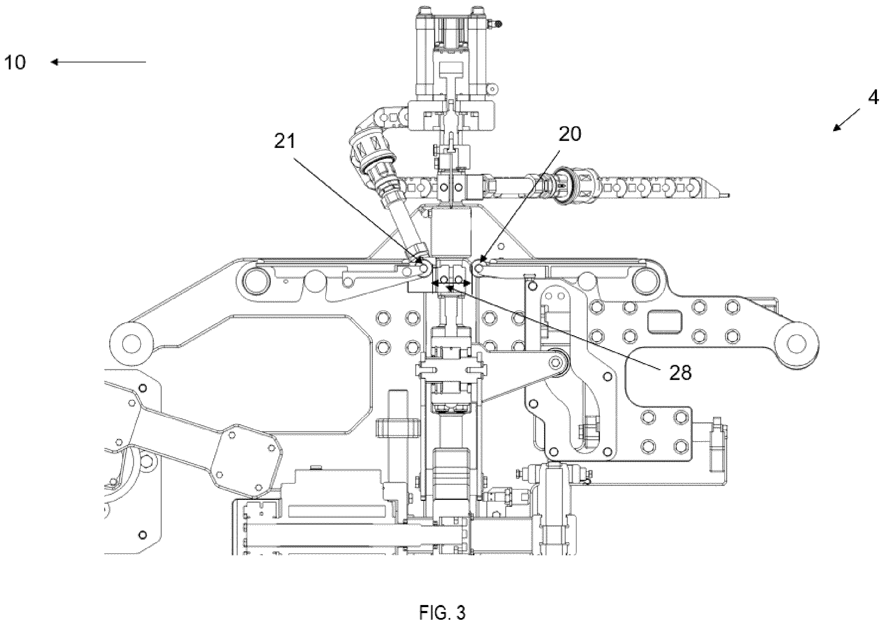

In Figure 3, the deflection roll 20 of the first conveyor belt assembly 14 is between an opened position and a closed position. In this state, the gap 28 is still maximum. The upper cross-sealing jaw 24 and the lower cross-sealing jaw 25 are moved away from each other.

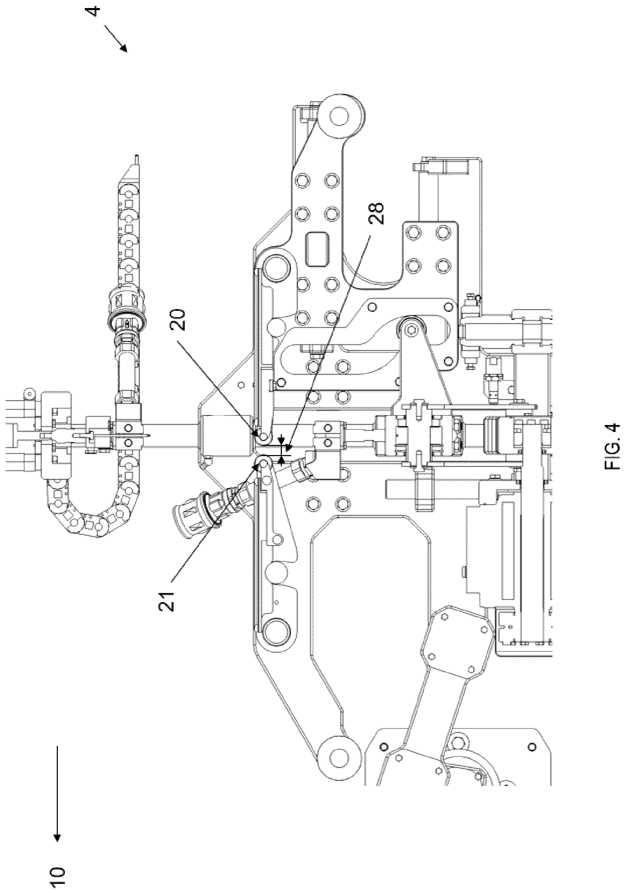

In Figure 4, the upper cross-sealing jaw 24 and the lower cross-sealing jaw 25 are distanced even further from each other. The deflection roll 20 of the first conveyor belt assembly 14 is in the closed position. In this state, the gap 28 is with a dimension of 0.8 centimeters minimum. For narrowing the gap 28, the first conveyor belt assembly 14 as a whole is moved in the running direction 10 by four centimeters. For this purpose, the first conveyor belt assembly 14 is fixed to a frame 29 of the sealing unit 22 such that it can move longitudinally along the running direction 10. For increasing the gap 28, i.e. changing from the state in Figure 4 to the State in Figure 2, the first conveyor belt assembly 14 is moved against the running direction 10.

As already mentioned, the longitudinal movement of the deflection roll 20 of the first conveyor belt assembly 14 can be selectively activated and deactivated. In the exemplary embodiment, the activation and deactivation is realized by means of a switching unit 30. The switching unit 30 comprises a shifting gate 31 and a lever 32. The shifting gate 31 is attached to the first conveyor belt assembly 14. The lever 32 is attached to the stroke axis 36 of the lower cross-sealing jaw 25 such that it can slide in the shifting gate 31. When the lower cross-sealing jaw 25 is moved downwards, the lever 32 slides downwards in the shifting gate too.

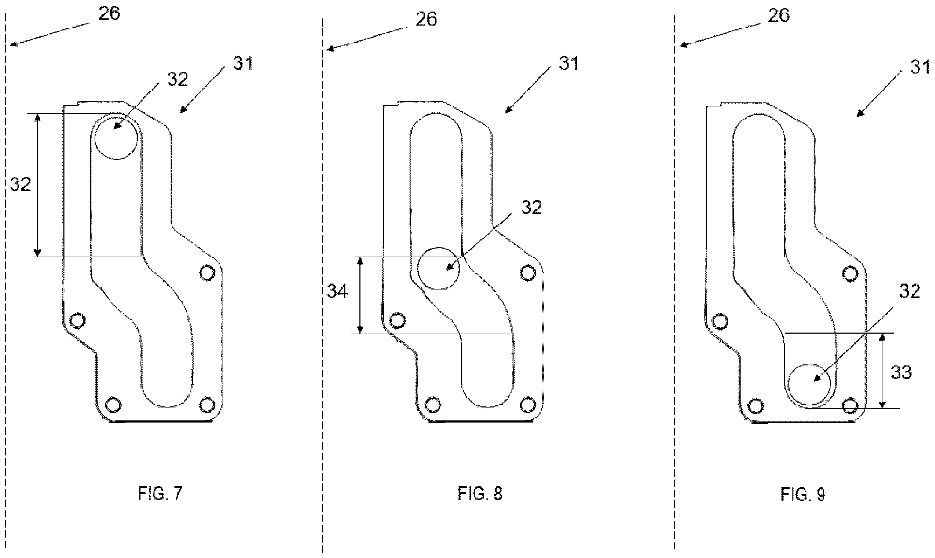

Depending on the movement of the lever 32 in the shifting gate 31, the longitudinal movement of the deflection roll 20 of the first conveyor belt assembly 14 is activated or deactivated. For this purpose, the switching gate 31 comprises an upper shifting part 32 (see Figure 7), a lower shifting part 33 (see Figure 9) and a middle shifting part 34 (see Figure 8) between the upper shifting part 32 and the lower shifting part 33. The upper shifting part 32 and the lower shifting part 33 extend longitudinally parallel to the sealing axis 26 of the upper and lower cross-sealing jaws 24, 25. As can be seen in Figures 2 to 4, the upper shifting part 32 is closer to the sealing axis 26 than the lower shifting part 33. The middle shifting part 34 is inclined with respect to the sealing axis 26 such that the lever 31 performs a movement away from or towards the sealing axis 26 when sliding between the upper shifting part 32 to the lower shifting part 33. Since the shifting gate 31 is fixed to the first conveyor belt assembly 14, the first conveyor belt assembly 14 is moved away from or to the sealing axis 26 with the lever 32. In this way, the first conveyor belt assembly 14 is moved longitudinally in and against the running direction 10.

As already mentioned, the longitudinal movement of the deflection roll 20 of the first conveyor belt assembly 14 can be selectively activated and deactivated. In the exemplary embodiment, the longitudinal movement of the deflection roll 20 of the first conveyor belt assembly 14 is activated, if the height of the product 23 within the packaging material 8 measured from the upper surface of the conveyor belt 16 on which the product 23 is placed in the transverse direction, is higher than a prescribed height value of ten centimeters.

In a first situation, the product height is five centimeters. In this case, each of the upper and lower cross-sealing jaws 24, 25 performs a vertical movement of six centimeters along the sealing axis 26. The lever 32 is only moved within the upper shifting part 32 (see Figures 2-3 and 7). Thus, the longitudinal movement of the deflection roll 20 of the first conveyor belt assembly 14 is not activated (see Figures 2-3 and Figure 7). During movement of the upper and lower cross-sealing jaws 24, 25, the gap 28 remains constantly 4.8 centimeters.

In a second situation, the product height is 12 centimeters. In this case, each of the upper and lower cross-sealing jaws 24, 25 performs a vertical movement of thirteen centimeters along the sealing axis 26. The lever 32 is moved from the upper shifting part 32 pass the middle shifting part 34 to the lower shifting part 33 and vice versa (see Figures 2-4 and Figures 7-9). Thus, the longitudinal movement of the deflection roll 20 of the first conveyor belt assembly 14 is activated. During movement of the upper and lower cross-sealing jaws 24, 25, the gap 28 varies between 4.8 centimeters and 0.8 centimeters.

## Claims

1. Sealing unit (4) for producing a cross-sealed seam (35) on a packaging material (8), wherein the sealing unit (4) comprises:
- a first conveyor belt assembly (14) and a second conveyor belt assembly (15), wherein each of the first conveyor belt assembly (14) and the second conveyor belt assembly (15) comprises a conveyor belt (16, 17) for transporting the packaging material (8) in a running direction (10), a drive roll (18, 19) for driving the conveyor belt (16, 17) and a deflection roll (20, 21) for deflecting the conveyor belt (16, 17), and
- a sealing device (22) for providing the cross-sealed seam (35) on the packaging material (8), wherein the sealing device (22) is positioned between the first conveyor belt assembly (14) and the second conveyor belt assembly (15),
wherein the deflection roll (20) of the first conveyor belt assembly (14) is movable towards and away from the deflection roll (21) of the second conveyor belt assembly (15) in the running direction (10) such that a gap (28) between the deflection roll (20) of the first conveyor belt assembly (14) and the deflection roll (21) of the second conveyor belt assembly (15) varies with the longitudinal movement of the deflection roll (20) of the first conveyor belt assembly (14), wherein the longitudinal movement of the deflection roll (20) of the first conveyor belt assembly (14) may be selectively activated.

2. Sealing unit according to claim 1, wherein the sealing unit (4) is operable in a first operating mode and in a second operating mode, wherein in the first operating mode the gap (28) remains constant and wherein in the second operating mode the gap varies with the longitudinal movement of the deflection roll (20) of the first conveyor belt assembly (14).

3. Sealing unit according to claim 1 or 2, wherein the sealing device (22) comprises an upper cross-sealing jaw (24) and a lower cross-sealing jaw (25), wherein the upper cross-sealing jaw (24) and the lower cross-sealing jaw (25) are movable towards and away from each other in a direction perpendicular to the running direction (10) for providing the cross-sealed seam (35), wherein the longitudinal movement of the deflection roll (20) of the first conveyor belt assembly (14) depends on the movement of the upper cross-sealing jaw (24) and the lower cross-sealing jaw (25).

4. Sealing unit according to any one of the preceding claims, wherein a longitudinal moving speed and/or a displacement path of the deflection roll (20) of the first conveyor belt assembly (14) depends on a speed and/or an opening height of the upper cross-sealing jaw (24) and the lower cross-sealing jaw (25).

5. Sealing unit according to any one of the preceding claims, wherein the gap (28) is variable between 0.5 and 15 centimeters, in particular between 0.8 centimeters and 4.8 centimeters.

6. Sealing unit according to any one of the preceding claims, **characterized by** a switching unit (30) for activating and deactivating the longitudinal movement of the deflection roll (20) of the first conveyor belt assembly (14).

7. Sealing unit according to claim 6, wherein the switching unit (30) is configured for electrically and/or mechanically activating the longitudinal movement of the deflection roll (20) of the first conveyor belt assembly (14).

8. Sealing unit according to claim 6 or 7, wherein the switching unit (30) comprises a shifting gate (31) and a lever (32), wherein the shifting gate (31) is attached to the first conveyor belt assembly (14) and wherein the lever (32) is attached to the lower cross-sealing jaw (25), wherein the lever (32) is slidable in the shifting gate (31) depending on the movement of the lower cross-sealing jaw (25), wherein activation and/or deactivation of the longitudinal movement of the deflection roll (20) of the first conveyor belt assembly (14) depends on the position of the lever (32) in the shifting gate (31).

9. Sealing unit according to any one of the preceding claims, wherein the sealing device (22) comprises a cutting device (27) for cross-cutting the packaging material (8) into sealed packages (12), in particular wherein the sealing device (22) is configured for sealing and cutting simultaneously.

10. Sealing unit according to any one of the preceding claims, wherein the deflection roll (21) of the second conveyor belt assembly (15) is movable towards and away from the deflection roll (20) of the first conveyor belt assembly (14) in the running direction (10), wherein the longitudinal movement of the deflection roll (21) of the second conveyor belt assembly (15) is opposite to the longitudinal movement of the deflection roll (20) of the first conveyor belt assembly (14).

11. Tubular bag packaging machine (1) for producing a package (12) with a cross-sealed seam (35) from a packaging material (8), wherein the tubular bag packaging machine (1) comprises a sealing unit (4) according to any one of claims 1 to 10.

12. Method for producing a cross-sealed seam (35) on a packaging material (8) by means of a sealing unit (4) according to any one of claims 1 to 10, wherein the method comprises the steps of:
moving the packaging material (8) to the sealing device (22) by means of the conveyor belt (16) of the first conveyor belt assembly (14),
sealing the packaging material (8) with the sealing device (22), and
moving the sealed packaging material (8) away from the sealing device (22) by means of the conveyor belt (17) of the second conveyor belt assembly (15),
wherein the longitudinal movement of the deflection roll (20) of the first conveyor belt assembly (14) towards and away from the deflection roll (21) of the second conveyor belt assembly (15) in the running direction (10) is selectively activated,
wherein if the longitudinal movement of the deflection roll (20) of the first conveyor belt assembly (14) is activated, the gap (28) between the deflection roll (20) of the first conveyor belt assembly (14) and the deflection roll (21) of the second conveyor belt assembly (15) varies with the longitudinal movement of the deflection roll (20) of the first conveyor belt assembly (14) and if the longitudinal movement of the deflection roll (20) of the first conveyor belt assembly (14) is deactivated, the gap (28) remains constant.

13. Method according to claim 12, wherein the sealing device (22) comprises an upper cross-sealing jaw (24) and a lower cross-sealing jaw (25), wherein the deflection roll (20) of the first conveyor belt assembly (14) is moved away from the deflection roll (21) of the second conveyor belt assembly (15) when the upper cross-sealing jaw (24) and the lower cross-sealing jaw (25) are moved towards each other and wherein the deflection roll (20) of the first conveyor belt assembly (14) is moved towards the deflection roll (21) of the second conveyor belt assembly (15) when the upper cross-sealing jaw (24) and the lower cross-sealing jaw (25) are moved away from each other.

14. Method according to claim 12 or 13, wherein during the sealing step the packaging material (8) is cut by the cutting device (27) of the sealing device (22) to provide a cross-sealed package (12).

15. Method according to any one of claims 12 to 14, wherein the longitudinal movement of the deflection roll (20) of the first conveyor belt assembly (14) is activated if a height of a product (23) within the packaging material (8) is higher than a prescribed height value and/or if a length of the sealed package (12) is lower than a prescribed length value.
